# FASCICULE DE BREVET EUROPEEN

(11) **EP 2 932 633 B1**
(45) Date de publication et mention de la délivrance du brevet: **05.02.2020**
(21) Numéro de dépôt: 13801547.4
(22) Date de dépôt: 04.12.2013
(51) Int. Cl.: H04H 20/22

(54) **DISPOSITIF ET PROCEDE DE BASCULEMENT DEPUIS UN PREMIER FLUX DE DONNEES VERS UN SECOND FLUX DE DONNEES**
GERÄT UND VERFAHREN ZUM UMSCHALTEN ZWISCHEN EINEM ERSTEN DATENSTROM UND EINEM ZWEITEN DATENSTROM
DEVICE AND METHOD FOR SWITCHING BETWEEN A FIRST DATA STREAM AND A SECOND DATA STREAM

(30) Priorité: 11.12.2012 FR 1261880
(43) Date de publication de la demande: 21.10.2015
(73) Titulaire: SAGEMCOM BROADBAND SAS, 92500 Rueil Malmaison (FR)
(72) Inventeur: LANDAIS, Thomas, F-92500 Rueil Malmaison (FR); LEGROS, Jean-François, F-92500 Rueil Malmaison (FR)
(74) Mandataire: Cabinet Le Guen Maillet
(86) Numéro de dépôt international: PCT/EP2013/075454
(87) Numéro de publication internationale: WO 2014/090643

(56) Documents cités:
- EP-A1- 1 233 556
- EP-A2- 1 073 224
- US-A1- 2011 149 753
- US-B1- 6 415 326
- "Hybrid Broadcast Broadband TV ; ETSI TS 102 796 V1.1.1" In: "Hybrid Broadcast Broadband TV ; ETSI TS 102 796 V1.1.1", 1 juin 2010 (2010-06-01), ETSI STANDARDS, LIS, SOPHIA ANTIPOLIS CEDEX, FRANCE, XP055001426, abrégé page 11 - page 19

## Description

La présente invention concerne le basculement depuis un premier flux de données vers un second flux de données dans le cadre d'une diffusion d'un contenu audio et/ou vidéo.

Avec la multiplication des réseaux de diffusion de contenus audio et/ou vidéo en mode continu (« live streaming » en anglais), il n'est pas rare qu'un même dispositif soit adapté pour recevoir, par un premier biais, un premier flux de données représentatif d'un contenu audio et/ou vidéo et, par un second biais, un second flux de données représentatif du même contenu audio et/ou vidéo. Par exemple, un même dispositif décodeur peut recevoir des mêmes chaînes télévisées à partir de deux réseaux de diffusion, comme le câble et le satellite. Un tel décodeur est alors équipé de deux syntoniseurs, ou tuners, qu'il convient de gérer de manière adéquate. En effet, étant donné que ces syntoniseurs peuvent fournir au moins pour certains contenus des flux de données avec des caractéristiques différentes, comme par exemple des résolutions différentes, et/ou que ces syntoniseurs peuvent permettre de capter des ensembles différents de chaînes télévisées, il est nécessaire d'effectuer un arbitrage dans leur utilisation.

EP 1 233 556 A1 décrit un système permettant de basculer entre deux émissions de programme utilisant deux syntoniseurs. Pour minimiser un décalage temporel de diffusion, un tampon est utilisé pendant le basculement pour enregistrer les données de chaque syntoniseur et synchroniser le basculement d'un syntoniseur à l'autre de manière à minimiser le décalage temporel de diffusion.

EP 1 073 224 A2 décrit une méthode de basculement de flux de données pour atteindre un basculement transparent entre flux de données. Lorsqu'un premier flux de données est reçu, un deuxième flux de données est sondé. La qualité de la réception et le délai entre la bande de garde du canal actuel et la bande de garde du flux de données sont enregistrés. Lorsqu'il est déterminé que le second flux de données a une meilleure qualité, une partie de données dynamiques du second canal est directement basculée pour une diffusion immédiate. Ainsi, lorsqu'un dispositif est adapté pour recevoir un premier flux de données représentatif d'un contenu audio et/ou vidéo et un second flux de données représentatif du même contenu audio et/ou vidéo, le dispositif peut être amené à effectuer des basculements d'un flux à l'autre. Etant donné que ces flux sont reçus ou traités par des biais différents, il existe typiquement un certain décalage temporel entre ces flux. Basculer alors de l'un à l'autre entraîne des désagréments pour un utilisateur voyant son flux basculer d'une source à une autre, comme par exemple des décrochages d'image et/ou de son.

Il est souhaitable de pallier ces inconvénients de l'état de la technique en fournissant une solution qui permette d'effectuer un tel basculement de manière transparente ou du moins peu perceptible pour l'utilisateur.

L'invention concerne un procédé selon la revendication 1. Ainsi, grâce à la gestion du décalage temporel par mise en pause d'un flux ou par réduction de débit de l'autre flux, le basculement est effectué de manière transparente (mise en pause) ou du moins peu perceptible (réduction de débit) pour l'utilisateur.

Des modes de réalisation particuliers sont définis dans les revendications dépendantes.

L'invention concerne également un dispositif de diffusion de contenus audio et/ou vidéo selon la revendication 7.

L'invention concerne également un programme d'ordinateur selon la revendication 8 et un support d'enregistrement selon la revendication 9.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système dans lequel la présente invention peut être mise en œuvre ;
- la Fig. 2 illustre schématiquement un exemple d'architecture matérielle d'un dispositif du système de communication ;
- la Fig. 3 illustre schématiquement un exemple de découpe modulaire d'au moins une partie du dispositif ;
- la Fig. 4 illustre schématiquement un algorithme de gestion de configuration du dispositif.

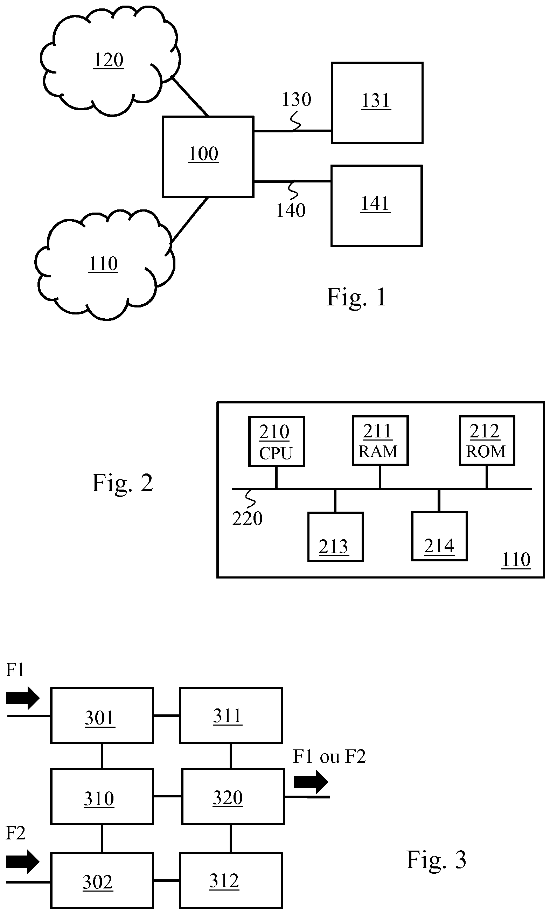

La Fig. 1 illustre schématiquement un système dans lequel la présente invention peut être mise en œuvre.

Le système de la Fig. 1 comporte un dispositif 100 connecté à un premier réseau de communication 120, tel que l'Internet, et à un second réseau de communication 110, tel qu'un réseau satellite.

Le dispositif 100 est adapté pour recevoir, via les premier 110 et second 120 réseaux, des contenus audio et/ou vidéo sous forme de flux de données diffusés en continu (« live streaming » en anglais). Le dispositif 100 est adapté pour recevoir des contenus audio et/ou vidéo via simultanément les premier 110 et second 120 réseaux.

Le dispositif 100 est en outre connecté via un lien 130 à un premier dispositif 131 consommateur de contenus audiovisuels, tel qu'un écran, et via un lien 140 à un deuxième dispositif 141 consommateur de contenus audiovisuels, tel qu'un enregistreur numérique ou un autre écran. En ce sens, le dispositif 100 est un dispositif de diffusion de contenus audio et/ou vidéo. Il convient de noter que les liens 130 et 140 peuvent être filaires ou sans-fils.

Lorsque le dispositif 100 reçoit un contenu audio et/ou vidéo via simultanément les premier 110 et second 120 réseaux, le dispositif 100 reçoit donc deux flux de données. Ces deux flux de données sont généralement décalés dans le temps étant donné que ces deux flux de données ne suivent pas des mêmes chemins de propagation. Il en serait de même si le dispositif 100 recevait un flux de données d'un réseau de communication et que des prétraitements distincts, donc à latence distinctes, étaient appliqués sur ce flux de données pour former deux flux de données injectés dans le dispositif 100.

Les flux de données sont préférentiellement selon un format défini par le groupe MPEG (« Moving Picture Experts Group » en anglais), comme par exemple le format MPEG-2. Le contenu audio et/ou vidéo tel que diffusé par le dispositif 100 via le lien 130 et/ou le lien 140 est soit sous forme d'un flux de données décodées, c'est-à-dire décompressé et donc le dispositif 100 comporte un décodeur correspondant, soit sous la forme d'un flux de données non-décodées, c'est-à-dire compressées et donc les dispositifs consommateurs 131 et 141 comportent respectivement des décodeurs correspondants.

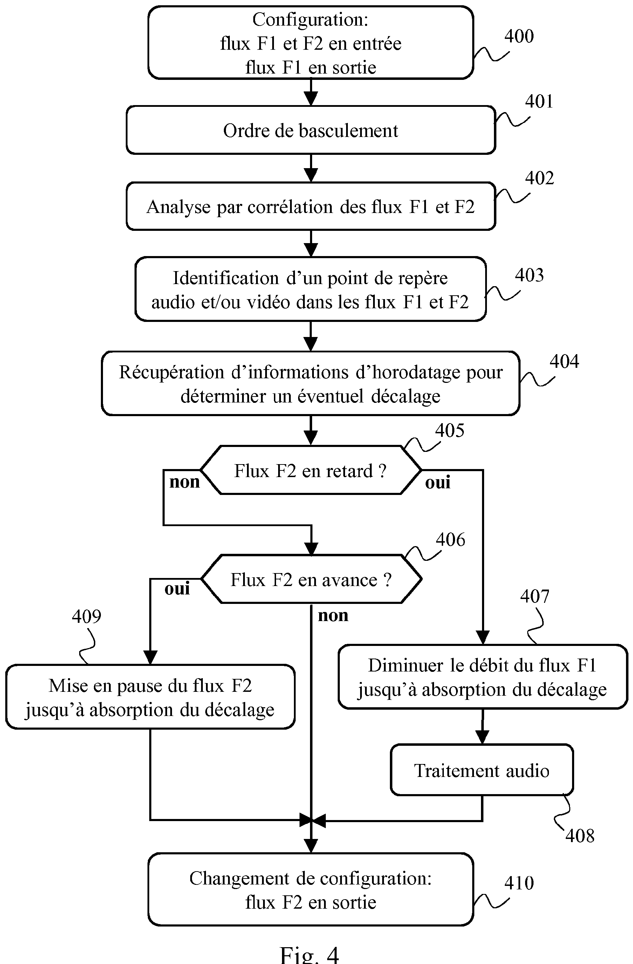

Dans le contexte de l'invention, le dispositif 100 est préalablement configuré pour diffuser le contenu audio et/ou vidéo à partir d'un premier flux de données parmi ces deux flux de données. Le comportement du dispositif 100, suite à une détection d'une commande de basculement de diffusion du contenu audio et/ou vidéo depuis le premier flux de données vers un second flux de données parmi ces deux flux de données, est détaillé ci-après en relation avec la Fig. 4. Une découpe modulaire d'au moins une partie du dispositif 100 pour mettre en œuvre ce comportement est détaillée ci-après en relation avec la Fig. 3.

La Fig. 2 illustre schématiquement un exemple d'architecture matérielle du dispositif 100. Le dispositif 100 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) ou un disque dur HDD (« Hard Disk Drive » en anglais) 213 ; et un ensemble d'interfaces 214 permettant de recevoir les contenus audiovisuels via les premier 110 et second 120 réseaux et de transmettre des contenus audiovisuels via les premier 130 et second 140 liens.

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif 100 est mis sous tension, le processeur 210 est capable de lire de la RAM 211 des instructions et de les exécuter. Ces instructions forment un programme d'ordinateur causant la mise en œuvre, par le processeur 210, de tout ou partie des modules, algorithmes et étapes décrits ci-après.

Ainsi, tout ou partie des modules, algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement un exemple de découpe modulaire d'au moins une partie du dispositif 100.

Le dispositif 100 comporte un premier module de réception 301 adapté pour recevoir le premier flux de données, noté F1 sur la Fig. 3, représentatif du contenu audio et/ou vidéo, et un second module 302 adapté pour recevoir le second flux de données, noté F2 sur la Fig. 3, représentatif du contenu audio et/ou vidéo. Dans un mode de réalisation particulier, les premier 301 et second 302 modules de réception comportent un syntoniseur (« tuner » en anglais) permettant de sélectionner un flux de données représentatif d'un contenu audio et/ou vidéo parmi une pluralité de flux de données diffusés en continu et représentatifs de contenus audio et/ou vidéo.

Le dispositif 100 comporte en outre un module d'arbitrage 320 permettant de sélectionner parmi les premier F1 et second F2 flux de données, et de basculer depuis le premier flux de données F1 vers le second flux de données F2, suite à une détection d'un ordre de basculement. Le flux sélectionné est ainsi transmis par le module d'arbitrage 320, par exemple via le lien 130.

Le dispositif 100 comporte en outre un module 310 de détermination par corrélation d'un repère du contenu audio et/ou vidéo dans le premier flux de données F1 et dans le second flux de données F2, connecté aux premier 301 et second 302 modules de réception. Le module 310 de détermination par corrélation a pour but de retrouver une même image et/ou un même son dans les premier F1 et second F2 flux de données. Ainsi, le module 310 de détermination par corrélation trouve un repère dans le contenu audio et/ou vidéo, et détermine un décalage temporel entre le premier flux de données F1 et le second flux de données F2, à partir d'une information d'horodatage associée à ce repère dans chacun des premier F1 et second F2 flux de données. Le module 310 de détermination par corrélation fournit alors une information représentative de ce décalage temporel au module d'arbitrage 320.

Le dispositif 100 comporte en outre un module 311 de réduction de débit de diffusion du premier flux de données F1, qui est intercalé entre le premier module de réception 301 et le module d'arbitrage 320. Ainsi, lorsque le décalage temporel indique que le premier flux de données F1 est en avance sur le second flux de données F2, le module d'arbitrage 320 requiert au module 311 de réduire le débit de diffusion (« *frame rate* » en anglais) du premier flux de données F1, et ce jusqu'à absorption du décalage temporel. La diffusion du premier flux de données F1 est ainsi temporairement ralentie, puis le module d'arbitrage 320 peut procéder au basculement depuis le premier flux de données F1 vers le second flux de données F2.

Le dispositif 100 comporte en outre un module 312 de mise en pause du second flux de données F2, qui est intercalé entre le premier module de réception 301 et le module d'arbitrage 320. Ce principe est appelé *time shifting* en terminologie anglo-saxonne. Ainsi, lorsque le décalage temporel indique que le premier flux de données F1 est en retard sur le second flux de données F2, le module d'arbitrage 320 requiert au module 312 de mettre en pause le flux de données F2, et ce jusqu'à absorption du décalage temporel. La mise en pause du second flux de données F2 est réalisée par déroutage du second flux de données F2 dans une mémoire, qui est activée en lecture dès absorption du décalage temporel. Ainsi, toute donnée du flux F2 écrite à un instant T n'est mise à disposition du module d'arbitrage 320 qu'à un instant T+D, où D représente le décalage temporel entre les premier F1 et second F2 flux de données. Ensuite, le module d'arbitrage 320 peut procéder au basculement depuis le premier flux de données F1 vers le second flux de données F2.

La Fig. 3 considère le cas d'un basculement depuis le premier flux de données F1 vers le second flux de données F2. Si l'on devait aussi permettre un basculement dans l'autre sens, le module 311 devrait aussi comporter une fonction de mise en pause du premier flux de données F1, et le module 312 devrait aussi comporter une fonction de réduction de débit de diffusion du second flux de données F2.

La Fig. 4 illustre schématiquement un algorithme de gestion de configuration du dispositif 100.

Dans une étape 400, le dispositif 100 est configuré de telle sorte que le dispositif 100 reçoit les premier F1 et second F2 flux de données représentatifs du contenu audio et/ou vidéo. Le dispositif 100 est en outre configuré de telle sorte que le dispositif 100 diffuse, par exemple via le lien 130, le premier flux de données F1 ou une version décompressée du premier flux de données F1. Dans le cadre de la découpe modulaire de la Fig. 3, une telle configuration est appliquée par le module d'arbitrage 320.

Dans une étape 401, le dispositif 100 détecte un ordre de basculement de diffusion depuis le premier flux de données D1 vers le second flux de données F2. Par exemple, le premier flux de données F1 est issu d'un syntoniseur permettant de recevoir un premier ensemble de chaînes télévisées, et le second flux de données F2 est issu d'un syntoniseur permettant de recevoir un second ensemble de chaînes télévisées, et le syntoniseur dont est issu le premier flux de données F1 doit être libéré pour permettre à un autre dispositif consommateur de recevoir une chaîne télévisée uniquement présente dans le premier ensemble de chaînes télévisées.

Dans une étape 402, le dispositif 100 analyse par corrélation les données du flux F1 et du flux F2, ou des données issues d'un décodage du flux F1 et du flux F2. Dans le cadre de la découpe modulaire de la Fig. 3, une telle analyse par corrélation est effectuée par le module 310.

Dans un mode de réalisation particulier, les données audio et/ou vidéo des premier F1 et second F2 flux étant obtenues à partir d'une même opération de numérisation ou d'encodage, ces données audio et/ou vidéo sont supposées être identiques, lorsqu'elles correspondent à une même portion du contenu audio et/ou vidéo. L'analyse par corrélation consiste à repérer dans le second flux F2 (ou dans le premier flux F1) à quelle position se retrouve un ensemble prédéterminé des données du premier flux F1 (respectivement du second flux F2).

Dans un autre mode de réalisation particulier, le dispositif 100 peut aussi sélectionner des données audio et/ou vidéo du premier flux F1 (ou du second flux F2), comme une image, et rechercher dans le second flux F2 (respectivement dans le premier flux F1), des données présentant un taux de corrélation supérieur à un seuil prédéfini.

Dans encore un autre mode de réalisation particulier, le dispositif 100 peut aussi sélectionner des données audio et/ou vidéo du premier flux F1 (ou du second flux F2), comme une image, et rechercher dans le second flux de données F2 (respectivement dans le premier flux de données F1), des données présentant le plus fort taux de corrélation parmi un ensemble de données. Cela permet de gérer le cas où les données des premier F1 et second F2 flux ne sont pas obtenues par une même opération de numérisation ou d'encodage, ou si du bruit s'est inséré dans les données d'au moins l'un des flux de données F1 et F2.

Dans encore un autre mode de réalisation particulier, lorsque les données des premier F1 et second F2 flux sont des données vidéo ou des données audiovisuelles, le dispositif 100 peut effectuer l'analyse par corrélation sur la base d'histogrammes de luminance des images des premier F1 et second F2 flux de données.

Dans encore un autre mode de réalisation particulier, lorsque les données des premier F1 et second F2 flux sont des données audio ou des données audiovisuelles, le dispositif 100 peut mettre en œuvre l'algorithme de déformation temporelle dynamique DTW (« Dynamic Time Wraping » en anglais), afin de mesurer des similarités dans les données audio.

Dans encore un autre mode de réalisation particulier, lorsque les données des premier F1 et second F2 flux sont des données audio ou des données audiovisuelles, l'analyse par corrélation est effectuée par détermination d'empreintes acoustiques sur des portions des premier F1 et second F2 flux de données. Le dispositif 100 détermine une première empreinte acoustique correspondant à une durée prédéfinie du contenu pour le premier flux de données F1 (ou le second flux de données F2) et déterminer une seconde empreinte acoustique pour différents ensembles de données du second flux F2 (respectivement du premier flux F1) correspondant à la même durée prédéfinie. Une empreinte acoustique est résumée numérique déterministe d'un signal audio. La première empreinte acoustique sert de référence et le dispositif 100 utilise une fenêtre glissante sur les données du second flux F2 pour comparer la seconde empreinte acoustique à la première empreinte acoustique jusqu'à obtenir un taux de corrélation supérieur à un seuil prédéfini. La détermination de telles empreintes met par exemple en jeu une détection de pics de fréquence et une détermination d'écart entre ces pics de fréquence dans un spectrogramme simplifié du contenu audio.

Dans encore un autre mode de réalisation particulier, les données audio et/ou vidéo des premier F1 et second F2 flux étant encodées selon un format de compression, le dispositif 100 procède au préalable à une décompression correspondante d'au moins une partie des données audio et/ou vidéo des premier F1 et second F2 flux, pour permettre la mise en œuvre de l'opération d'analyse par corrélation. Lorsque les données des premier F1 et second F2 flux sont des données vidéo ou des données audiovisuelles encodées par codage prédictif, le dispositif 100 peut ne pratiquer cette opération de décodage que sur les images à codage interne, c'est-à-dire les images *intra*, et ne pas pratiquer cette opération de décodage que sur les images à codage prédictif, c'est-à-dire les images *inter.*

Dans une étape 403, grâce à l'opération d'analyse par corrélation, le dispositif 100 détermine un repère du contenu audio et/ou vidéo dans le premier flux de données F1 et dans le second flux de données F2.

Dans une étape 404, les données audio et/ou vidéo des premier F1 et second F2 flux étant associées à des informations d'horodatage, le dispositif 100 détermine un décalage temporel entre le premier flux de données F1 et le second flux de données F2 à partir d'une information d'horodatage associée au repère dans chacun des premier F1 et second F2 flux de données. Lorsque les données des premier F1 et second F2 flux sont des données vidéo ou des données audiovisuelles encodées selon un format MPEG, les informations d'horodatages peuvent être représentatives d'instants auxquels les données audio et/ou vidéo correspondantes doivent être prises en charge par un décodeur et que l'on appelle DTS (« Decode Time Stamp » en anglais), ou être représentatives d'instants auxquels les données audio et/ou vidéo correspondantes doivent être présentées à un dispositif consommateur et que l'on appelle PTS (« Présentation Time Stamp » en anglais).

Dans un mode de réalisation particulier, le dispositif 100 stocke une information représentative du décalage temporel détermine et utilise cette information pour paramétrer l'analyse par corrélation pour un prochain basculement entre les premier F1 et second F2 flux de données. L'information stockée définit par exemple le point de départ de l'analyse par corrélation lors de ce prochain basculement.

Dans une étape 405, en fonction du décalage temporel déterminé, le dispositif 100 détermine si le second flux de données F2 est en retard par rapport au premier flux de données F1. Si tel est le cas, une étape 407 est effectuée ; sinon, une étape 406 est effectuée.

Dans une étape 406, en fonction du décalage temporel déterminé, le dispositif 100 détermine si le second flux de données F2 est en avance par rapport au premier flux de données F1. Si tel est le cas, une étape 409 est effectuée ; sinon, il n'y a pas de décalage temporel et une étape 410 est effectuée.

Dans l'étape 407, le second flux de données F2 est en retard par rapport au premier flux de données F1. Le dispositif 100 réduit alors le débit de diffusion, appelé *frame rate,* du premier flux de données F1 jusqu'à absorption du décalage temporel. Le dispositif 100 modifie alors les informations d'horodatage des données du premier flux de données F1 en conséquence, notamment les informations PTS dans le cadre d'un flux MPEG. Dans le cadre de la découpe modulaire de la Fig. 3, le module d'arbitrage 320 requiert au module 311 d'activer la fonction de réduction de débit du second flux de données F2, jusqu'à absorption du décalage temporel. Une étape optionnelle 408 peut être effectuée, sinon l'étape 410 est effectuée.

Dans l'étape 408, lorsque les données des premier F1 et second F2 flux sont des données audio ou audiovisuelles, le dispositif 100 effectue un traitement audio sur les données afin de conserver la hauteur (« pitch » en anglais) sonore, c'est-à-dire afin d'éviter que, à cause du ralentissement lié à la diminution du débit de la diffusion du premier flux de données F1, le rendu sonore soit plus grave. Un vocodeur de phase (« Phase Vocoder » en anglais) peut être mis en œuvre, en utilisant des algorithmes de Flanagan, de Griffin et Lim, de Laroche et Dolson, ou de Roebel. Un algorithme de type SOLA (« Synchonized OverLap-Add » en anglais) peut être mis en œuvre, limitant ainsi la consommation de ressources de traitement pour conserver la hauteur sonore. Le traitement audio est appliqué jusqu'à absorption du décalage temporel. Ensuite, l'étape 410 est mise en œuvre.

Dans l'étape 409, le second flux de données F2 est en avance par rapport au premier flux de données F1. Le dispositif 100 met alors en pause le second flux de données F2 jusqu'à absorption du décalage temporel. Comme déjà mentionné, on parle en terminologie anglo-saxonne de *time shifting.* Dans le cadre de la découpe modulaire de la Fig. 3, le module d'arbitrage 320 requiert au module 312 d'activer la fonction de mise en pause du second flux de données F2, jusqu'à absorption du décalage temporel. Ensuite, l'étape 410 est mise en œuvre.

Dans l'étape 410, le dispositif 100 bascule dans une configuration telle que le dispositif 100 diffuse, par exemple via le lien 130, le second flux de données F2 ou une version décompressée du second flux de données F2. Dans le cadre de la découpe modulaire de la Fig. 3, une telle configuration est appliquée par le module d'arbitrage 320.

## Revendications

1. Procédé mis en œuvre par un dispositif (100) de diffusion de contenus vidéo ou audio-vidéo, ledit dispositif recevant un premier flux de données représentatif d'un contenu vidéo ou audio-vidéo et un second flux de données représentatif du contenu vidéo ou audio-vidéo, ledit dispositif étant préalablement configuré (400) pour diffuser ledit contenu vidéo ou audio-vidéo à partir du premier flux de données,
le procédé étant tel que, avant basculement (410) depuis le premier flux de données vers le second flux de données, ledit dispositif effectue les étapes suivantes :
- mise en pause (409) du second flux de données jusqu'à absorption du décalage temporel, lorsqu'un décalage temporel indique que le premier flux de données est en retard sur le second flux de données ;
- réduction (407) d'une cadence d'image du premier flux de données jusqu'à absorption du décalage temporel, lorsque le décalage temporel indique que le premier flux de données est en avance sur le second flux de données,
le procédé étant **caractérisé en ce que**, suite à une détection (401) d'une commande de basculement de diffusion du contenu vidéo ou audio-vidéo depuis le premier flux de données vers le second flux de données, ledit dispositif effectue les étapes suivantes :
- détermination (402, 403) par corrélation d'un repère du contenu vidéo ou audio-vidéo dans le premier flux de données et dans le second flux de données, la corrélation étant effectuée sur la base d'histogrammes de luminance d'images des premier et second flux de données ;
- détermination (404) du décalage temporel entre le premier flux de données et le second flux de données à partir d'une information d'horodatage associée audit repère dans chacun des premier et second flux de données.

2. Procédé selon la revendication 1, où la mise en pause du second flux de données est réalisée par déroutage du second flux de données dans une mémoire, ladite mémoire étant activée en lecture dès absorption du décalage temporel.

3. Procédé selon l'une quelconque des revendications 1 et 2, où, lorsque les données des premier et second flux sont des données compressées, ledit dispositif effectue préalablement à ladite étape de détermination par corrélation une étape de décompression de données et effectue la corrélation sur la base des données décompressées.

4. Procédé selon la revendication 3, où, lorsque les données des premier et second flux sont des données vidéo ou audio-vidéo compressées par codage prédictif, le dispositif effectue la décompression uniquement sur des images intra pour la corrélation.

5. Procédé selon l'une quelconque des revendications 1 à 4, où ledit dispositif stocke une information représentative du décalage temporel et utilise ladite information pour paramétrer la corrélation pour un prochain basculement entre les premier et second flux de données.

6. Procédé selon l'une quelconque des revendications 1 à 5, où, lorsque les données des premier et second flux sont des données audio-vidéo et lorsque ledit dispositif réduit la cadence d'image du premier flux de données jusqu'à absorption du décalage temporel, ledit dispositif effectue un traitement audio (408) sur les données du premier flux afin d'en conserver la hauteur sonore.

7. Dispositif (100) de diffusion de contenus vidéo ou audio-vidéo, ledit dispositif comportant des moyens pour recevoir un premier flux de données représentatif d'un contenu vidéo ou audio-vidéo et un second flux de données représentatif du contenu vidéo ou audio-vidéo, ledit dispositif étant configuré (400) pour diffuser ledit contenu vidéo ou audio-vidéo à partir du premier flux de données,
le dispositif étant tel que, avant basculement (410) depuis le premier flux de données vers le second flux de données, ledit dispositif met en œuvre :
- des moyens de mise en pause (409) du second flux de données jusqu'à absorption d'un décalage temporel, lorsque le décalage temporel indique que le premier flux de données est en retard sur le second flux de données ;
- des moyens de réduction (407) d'une cadence d'image du premier flux de données jusqu'à absorption du décalage temporel, lorsque le décalage temporel indique que le premier flux de données est en avance sur le second flux de données ;
**caractérisé en ce que**, suite à une détection (401) d'une commande de basculement de diffusion du contenu vidéo ou audio-vidéo depuis le premier flux de données vers le second flux de données, ledit dispositif met en œuvre :
- des moyens de détermination par corrélation (402, 403) d'un repère du contenu vidéo ou audio-vidéo dans le premier flux de données et dans le second flux de données, la corrélation étant effectuée sur la base d'histogrammes de luminance d'images des premier et second flux de données ;
- des moyens de détermination (404) du décalage temporel entre le premier flux de données et le second flux de données à partir d'une information d'horodatage associée audit repère dans chacun des premier et second flux de données.

8. Programme d'ordinateur, comprenant des instructions pour mettre en œuvre par un processeur le procédé selon l'une quelconque des revendications 1 à 6, lorsque ledit programme est exécuté par ledit processeur.

9. Support d'enregistrement sur lequel est stocké un programme d'ordinateur comprenant des instructions pour mettre en œuvre par un processeur le procédé selon l'une quelconque des revendications 1 à 6, lorsque ledit programme est exécuté par ledit processeur.

## Patentansprüche

1. Verfahren, welches von einer Vorrichtung (100) zur Verbreitung von Video- oder Audio-Video-Inhalten durchgeführt wird, wobei die Vorrichtung einen ersten Datenstrom, der für einen Video- oder Audio-Video-Inhalt repräsentativ ist, und einen zweiten Datenstrom, der für den Video- oder Audio-Video-Inhalt repräsentativ ist, empfängt, wobei die Vorrichtung zuvor dafür konfiguriert wird (400), den Video- oder Audio-Video-Inhalt anhand des ersten Datenstroms zu verbreiten,
wobei das Verfahren so ausgelegt ist, dass die Vorrichtung vor einem Umschalten (410) vom ersten Datenstrom zum zweiten Datenstrom die folgenden Schritte ausführt:
- Anhalten (409) des zweiten Datenstroms bis zum Ausgleich einer zeitlichen Verschiebung, wenn die zeitliche Verschiebung anzeigt, dass der erste Datenstrom gegenüber dem zweiten Datenstrom verzögert ist;
- Verringerung (407) einer Bildfrequenz des ersten Datenstroms bis zum Ausgleich der zeitlichen Verschiebung, wenn die zeitliche Verschiebung anzeigt, dass der erste Datenstrom dem zweiten Datenstrom vorauseilt,
wobei das Verfahren **dadurch gekennzeichnet ist, dass** die Vorrichtung im Anschluss an eine Erkennung (401) eines Befehls zum Umschalten der Verbreitung des Video- oder Audio-Video-Inhalts vom ersten Datenstrom zum zweiten Datenstrom die folgenden Schritte ausführt:
- Bestimmung (402,403), durch Korrelation, eines Kennzeichens des Video- oder Audio-Video-Inhalts im ersten Datenstrom und im zweiten Datenstrom, wobei die Korrelation auf der Basis von Leuchtdichte-Histogrammen von Bildern des ersten und zweiten Datenstroms durchgeführt wird;
- Bestimmung (404) der zeitlichen Verschiebung zwischen dem ersten Datenstrom und dem zweiten Datenstrom anhand einer Zeitstempelinformation, die dem Kennzeichen im ersten und im zweiten Datenstrom jeweils zugeordnet ist.

2. Verfahren nach Anspruch 1, wobei das Anhalten des zweiten Datenstroms durch Umleitung des zweiten Datenstroms in einen Speicher realisiert wird, wobei der Speicher zum Lesen aktiviert wird, sobald der Ausgleich der zeitlichen Verschiebung erfolgt ist.

3. Verfahren nach einem der Ansprüche 1 und 2, wobei, wenn die Daten des ersten und zweiten Stroms komprimierte Daten sind, die Vorrichtung vor dem Schritt der Bestimmung durch Korrelation einen Schritt der Datendekomprimierung durchführt und die Korrelation auf der Basis der dekomprimierten Daten durchführt.

4. Verfahren nach Anspruch 3, wobei, wenn die Daten des ersten und zweiten Stroms durch prädiktive Codierung komprimierte Video- oder Audio-Video-Daten sind, die Vorrichtung die Dekomprimierung nur an Intra-Bildern für die Korrelation durchführt.

5. Verfahren nach einem der Ansprüche 1 bis 4, wobei die Vorrichtung eine Information speichert, die für die zeitliche Verschiebung repräsentativ ist, und diese Information verwendet, um die Korrelation für ein nächstes Umschalten zwischen dem ersten und zweiten Datenstrom zu parametrieren.

6. Verfahren nach einem der Ansprüche 1 bis 5, wobei, wenn die Daten des ersten und zweiten Stroms Audio-Video-Daten sind und wenn die Vorrichtung die Bildfrequenz des ersten Datenstroms bis zum Ausgleich der zeitlichen Verschiebung verringert, die Vorrichtung eine Audioverarbeitung (408) an den Daten des ersten Stroms durchführt, um dessen Tonhöhe beizubehalten.

7. Vorrichtung (100) zur Verbreitung von Video- oder Audio-Video-Inhalten, wobei die Vorrichtung Mittel zum Empfangen eines ersten Datenstroms, der für einen Video- oder Audio-Video-Inhalt repräsentativ ist, und eines zweiten Datenstroms, der für den Video- oder Audio-Video-Inhalt repräsentativ ist, aufweist, wobei die Vorrichtung dafür konfiguriert ist (400), den Video- oder Audio-Video-Inhalt anhand des ersten Datenstroms zu verbreiten,
wobei die Vorrichtung so ausgelegt ist, dass die Vorrichtung vor einem Umschalten (410) vom ersten Datenstrom zum zweiten Datenstrom einsetzt:
- Mittel zum Anhalten (409) des zweiten Datenstroms bis zum Ausgleich einer zeitlichen Verschiebung, wenn die zeitliche Verschiebung anzeigt, dass der erste Datenstrom gegenüber dem zweiten Datenstrom verzögert ist;
- Mittel zur Verringerung (407) einer Bildfrequenz des ersten Datenstroms bis zum Ausgleich der zeitlichen Verschiebung, wenn die zeitliche Verschiebung anzeigt,
dass der erste Datenstrom dem zweiten Datenstrom vorauseilt,
**dadurch gekennzeichnet, dass** die Vorrichtung im Anschluss an eine Erkennung (401) eines Befehls zum Umschalten der Verbreitung des Video- oder Audio-Video-Inhalts vom ersten Datenstrom zum zweiten Datenstrom einsetzt:
- Mittel zur Bestimmung, durch Korrelation (402, 403), eines Kennzeichens des Video- oder Audio-Video-Inhalts im ersten Datenstrom und im zweiten Datenstrom, wobei die Korrelation auf der Basis von Leuchtdichte-Histogrammen von Bildern des ersten und zweiten Datenstroms durchgeführt wird;
- Mittel zur Bestimmung (404) der zeitlichen Verschiebung zwischen dem ersten Datenstrom und dem zweiten Datenstrom anhand einer Zeitstempelinformation, die dem Kennzeichen im ersten und im zweiten Datenstrom jeweils zugeordnet ist.

8. Computerprogramm, welches Anweisungen zur Durchführung des Verfahrens nach einem der Ansprüche 1 bis 6 durch einen Prozessor, wenn das Programm von dem Prozessor ausgeführt wird, umfasst.

9. Aufzeichnungsmedium, auf welchem ein Computerprogramm gespeichert ist, das Anweisungen zur Durchführung des Verfahrens nach einem der Ansprüche 1 bis 6 durch einen Prozessor, wenn das Programm von dem Prozessor ausgeführt wird, umfasst.

## Claims

1. Method implemented by a device (100) and for broadcasting video or audio-video contents, said device receiving a first data stream representative of a video or audio-video content and second data stream representative of the video or audio-video content, said device being previously configured (400) to broadcast said video or audio-video content from the first data stream,
the method being such that, before the switchover (410) from the first data stream to the second data stream, said device performs the following steps:
- pausing (409) of the second data stream until the time offset has been taken up, when a time offset indicates that the first data stream is delayed with respect to the second data stream;
- reduction (407) of an image rate of the first data stream until the time offset is taken up, when the time offset indicates that the first data stream is in advance with respect to the second data stream,
the method being **characterized in that**, following a detection (401) of a command to switch over broadcasting of the video or audio-video content from the first data stream to the second data stream, said device performs the following steps:
- determination (402, 403) by correlation of a marker of the video or audio-video content in the first data stream and in the second data stream, the correlation being performed on the basis of histograms of image luminance of the first and second data streams;
- determination (404) of the time offset between the first data stream and the data stream on the basis of timestamp information associated with said marker in each of the first and second data streams.

2. Method according to Claim 1, in which the pausing of the second data stream is performed by the diversion of the second data stream into a memory, said memory being activated in read mode as soon as the time offset has been taken up.

3. Method according to either one of Claims 1 and 2, in which, when the data of the first and second streams are compressed data, said device performs, prior to said step of determination by correlation, a step of data decompression and performs the correlation on the basis of the decompressed data.

4. Method according to Claim 3, in which, when the data of the first and second streams are video or audio-video data compressed by predictive coding, the device performs the decompression only on the inter-coded images for the correlation.

5. Method according to any one of Claims 1 to 4, in which said device stores information representative of the time offset and uses said information to parameterize the correlation for a subsequent switchover between the first and second data streams.

6. Method according to any one of Claims 1 to 5, in which, when the data of the first and second streams are audio-video data and when said device reduces the image rate of the first data stream until the time offset has been taken up, said device performs an audio processing (408) on the data of the first stream in order to conserve the sound level thereof.

7. Device (100) for broadcasting video or audio-video contents, said device comprising means for receiving a first data stream representative of a video or audio-video content and a second data stream representative of the video or audio-video content, said device being configured (400) to broadcast said video or audio-video content from the first data stream,
the device being such that, before the switchover (410) from the first data stream to the second data stream, said device implements:
- means (409) for pausing the second data stream until a time offset has been taken up, when the time offset indicates that the first data stream is delayed relative to the second data stream;
- means (407) for reducing an image rate of the first data stream until the time offset has been taken up, when the time offset indicates that the first data stream is in advance relative to the second data stream;
**characterized in that**, following a detection (401) of a command to switch over broadcasting of the video or audio-video content from the first data stream to the second data stream, said device implements:
- means (402, 403) for determining by correlation of a marker of the video or audio-video content in the first data stream and in the second data stream, the correlation being performed on the basis of histograms of image luminance of the first and second data streams;
- means (404) for determining the time offset between the first data stream and the second data stream on the basis of timestamp information associated with said marker in each of the first and second data streams.

8. Computer program, comprising instructions for the implementation, by a processor, of the method according to any one of Claims 1 to 6, when said program is executed by said processor.

9. Storage medium on which is stored a computer program comprising instructions for the implementation, by a processor, of the method according to any one of Claims 1 to 6, when said program is executed by said processor.
